# EUROPÄISCHE PATENTSCHRIFT

(11) **EP 3 935 720 B1**
(45) Veröffentlichungstag und Bekanntmachung des Hinweises auf die Patenterteilung: **15.06.2022**
(21) Anmeldenummer: 20710470.4
(22) Anmeldetag: 05.03.2020
(51) Int. Cl.: H02K 15/12

(54) **IMPRÄGNIERVORRICHTUNG ZUR TRÄUFELIMPRÄGNIERUNG EINES STATORS EINER ELEKTROMASCHINE**
IMPREGNATION DEVICE FOR TRICKLE IMPREGNATION OF A STATOR OF AN ELECTRIC MACHINE
DISPOSITIF D'IMPRÉGNATION POUR L'IMPRÉGNATION GOUTTE À GOUTTE D'UN STATOR D'UNE MACHINE ÉLECTRIQUE

(30) Priorität: 28.03.2019 DE 102019002234
(43) Veröffentlichungstag der Anmeldung: 12.01.2022
(73) Patentinhaber: Gehring Technologies GmbH + Co. KG, 73760 Ostfildern (DE)
(72) Erfinder: BERTHOLD, Jens, 06467 Hoym (DE); RASP, Richard A., 61250 Usingen (DE)
(74) Vertreter: DREISS Patentanwälte PartG mbB
(86) Internationale Anmeldenummer: PCT/EP2020/055873
(87) Internationale Veröffentlichungsnummer: WO 2020/193098

(56) Entgegenhaltungen:
- CN-A- 107 070 142
- JP-A- 2012 005 283
- US-A1- 2011 061 228

## Beschreibung

Die Erfindung betrifft eine Imprägniervorrichtung zur Träufelimprägnierung eines Stators einer Elektromaschine mit einem unter Temperaturerhöhung aushärtenden Kunstharz, wobei der Stator einen hohlzylindrischen Statorkern sowie wenigstens eine Wicklung aufweist, wobei koaxial innerhalb des Stators eine Antriebswelle angeordnet ist, welche von einem Antriebsmotor antreibbar ist, wobei an der Antriebswelle wenigstens eine Haltevorrichtung angeordnet ist, mittels welcher der Stator mit der Antriebswelle lösbar verbindbar ist, wobei eine Träufelvorrichtung vorhanden ist, mittels welcher das Kunstharz auf zumindest ein axiales Ende der Wicklung des Stators leitbar ist, wobei eine Heizvorrichtung vorhanden ist, mittels welcher die Wicklung sowie der Statorkern auf eine vorbestimmte Träufeltemperatur aufheizbar ist, und bei der die Heizvorrichtung wenigstens einen elektromagnetischen Induktor aufweist, der koaxial oder achsparallel zum Stator bewegbar angeordnet ist.

Es ist allgemein bekannt, dass bei der Herstellung einer Elektromaschine, sei es nun ein Elektromotor oder ein Generator, eine Verfestigung der Wicklung des Stators und Ankers vorgenommen werden muss. Dies geschieht heute üblicherweise mittels eines sogenannten Träufelverfahrens und einer diesbezüglichen Imprägniervorrichtung. Der Stator oder der Anker wird dazu aufgeheizt und hinsichtlich seiner Längsachse vorzugsweise schräg in der Imprägniervorrichtung eingespannt sowie um diese Längsachse gedreht. Der Stator oder Anker kann jedoch auch horizontal ausgerichtet sein. Anschließend wird vorzugsweise auf das höher angeordnete axiale Ende des Stators oder Ankers, etwa auf dessen Wicklungskopf, ein bei Raumtemperatur zunächst flüssiges Kunstharz aufgeträufelt. Das Kunstharz kann aus einer oder mehreren Komponenten bestehen, beispielsweise aus einem Basis-Kunstharz und einem Härter.

Der Volumenstrom, mit dem das noch flüssige Kunstharz auf die Wicklung des Stators oder Ankers aufgebracht wird, ist abgestimmt auf die jeweilige Aufnahmefähigkeit desselben. Nach dem Aufträufeln gelangt das Kunstharz in die Zwischenräume zwischen den Wicklungsdrähten sowie den Blechpaketen und füllt diese Zwischenräume vollständig aus. Bei einem anschließenden Erwärmen des Stators oder Ankers auf eine Aushärtetemperatur des Kunstharzes verfestigt sich dieses und wird zu einem Duroplast, welcher nach diesem Aushärten durch eine neuerliche Erwärmung nicht mehr verformbar ist. Hierdurch sind die mit dem Kunstharz in Kontakt gekommenen Bauteile des Stators oder Ankers fest miteinander verbunden. Das Duroplast erfüllt alle mechanischen und elektrischen Anforderungen, die an eine stillstehende oder rotierende Elektromaschine gestellt werden.

Um ein optimales Eindringen des zunächst flüssigen Kunstharzes in den Stator oder Anker zu gewährleisten, wird zumindest der Stator oder Anker vor dem Beginn des Träufelvorgangs auf eine sogenannte Träufeltemperatur erhitzt sowie während des Träufelvorgangs auf dieser Temperatur gehalten. Die Träufeltemperatur kann abhängig von dem verwendeten Kunstharz beispielsweise zwischen 70°C und 90°C betragen. Nachdem eine vorbestimmte Menge des zunächst noch flüssigen Kunstharzes in den Stator oder Anker eingebracht wurde, wird dieser über eine Geliertemperatur auf eine Aushärtetemperatur erhitzt, welche ebenfalls kunstharzabhängig beispielsweise zwischen 120°C und 160°C beträgt. Diese Aushärtetemperatur wird dann über einen vorbestimmten Zeitraum eingehalten, um so ein vollständiges Aushärten des Kunstharzes zu ermöglichen. Abschließend wird der Stator oder Anker auf Raumtemperatur abgekühlt und für weitere Herstellvorgänge zur Erzeugung der Elektromaschine bereitgestellt.

Die Erwärmung des Stators oder Ankers auf die Träufeltemperatur und die Aushärtetemperatur kann in einem dafür geeigneten Ofen erfolgen. Aus der DE 1 212 204 A und der DE 19 19 642 A ist es aber bereits bekannt, die Erwärmung des Stators oder Ankers mittels eines elektrischen Heizstromes zu erreichen, der durch die Wicklungen des Stators oder Ankers geleitet wird. Da ein einfaches Hindurchleiten eines Heizstromes durch die Wicklungen zu große Abweichungen der erreichbaren Ist-Temperaturen von den angestrebten Soll-Temperaturen entstehen lässt, wurde vorgeschlagen, das Erreichen und Aufrechterhalten der gewünschten Temperaturen durch eine Regelung des Heizstromes zu gewährleisten. Hierbei wurde die Erkenntnis genutzt, dass in einer Wicklung der Ohm'sche Widerstand mit ansteigender Temperatur zunimmt, so dass über den Ohm'schen Widerstand auf die Temperatur der Wicklung geschlossen werden kann. In der DE 1 212 204 A wurde daher vorgeschlagen, dass dann, wenn der für das Vorliegen der Träufeltemperatur oder Aushärtetemperatur erforderliche elektrische Widerstandswert der Wicklung erreicht ist, der durch die Wicklung des Stators oder Ankers geleitete Heizstrom abgeschaltet wird. Der Heizstrom wird erst dann wieder eingeschaltet, wenn ein vorbestimmt geringerer Widerstandswert der Wicklung gemessen wird, welches gleichbedeutend mit dem Unterschreiten einer unteren Grenztemperatur ist.

JP2012005283A, CN107070142A und US2011061228A1 offenbaren jeweils Imprägniervorrichtungen mit Merkmalen den Anspruchs 1.

Nachteilig bei diesen bekannten Verfahren und den dazu benutzten Vorrichtungen zum Imprägnieren eines Stators oder Ankers einer Elektromaschine ist jedoch, dass die Temperaturregelung mittels eines durch die Wicklung geleiteten Heizstromes erfolgt, der technisch aufwendig in den sich drehenden Stator oder Anker einzuspeisen ist. Außerdem weisen die in den beiden Druckschriften vorgeschlagenen Verfahren und Vorrichtungen den Mangel auf, dass die Regelung des Heizstromes allein auf die Temperatur der von dem Heizstrom durchflossenen Wicklung abgestellt ist. Dies ist zumindest in denjenigen Zeiträumen unvorteilhaft, in denen die die Wicklungen umgebenden anderen Bauteile noch nicht die Temperatur der Wicklungen angenommen haben. Da das Kunstharz aber nicht nur zwischen benachbarte Drähte beziehungsweise Drahtabschnitte der Wicklungen sondern auch mit anderen Bauteilen des Stators beziehungsweise Ankers in Kontakt gelangt, ergibt sich für das dort vorhandene Kunstharz eine nicht genau bekannte Temperatur. Daher ist zumindest die Aufheizphase bis zum Erreichen der Träufeltemperatur aufgrund von Erfahrungswerten so zu verlängern, bis davon ausgegangen werden kann, dass die durch die elektrische Widerstandsmessung ermittelte Wicklungstemperatur auch bei allen anderen Bauteilen des Stators oder Ankers vorliegt. Erst dann kann mit dem Einträufeln des Kunstharzes in den Stator oder Anker mit der gewünschten Prozesssicherheit begonnen werden. Da diese Unsicherheit hinsichtlich der Temperaturen der Bauteile des Stators oder Ankers und des Kunstharzes auch zu Beginn des Aushärtevorgangs vorliegt, muss dieser ebenfalls nachteilig um einen Sicherheitszeitraum verlängert werden. Letztlich wird es als ungünstig beurteilt, dass die Erwärmung des Kunstharzes nur mittelbar durch den Wärmetransport zwischen den Wicklungen und demselben stattfindet. Dies führt dazu, dass das Erreichen der Träufeltemperatur und der Aushärtetemperatur vergleichsweise lange dauert.

Die geschilderten Zeiträume für die Imprägnierung eines Stators oder Ankers bedeuten im Ergebnis eine kostenintensive Verlängerung der Fertigungsdauer sowie eine Vergrößerung der Energiekosten zum Aufheizen sowie Konstanthalten der Träufel- und Aushärtungstemperatur.

In der DE 10 2017 001 939 A1 der copperING GmbH wurde eine gattungsgemäße Imprägniervorrichtung vorgeschlagen, bei der zum Erwärmen eines Stators ein elektromagnetischer Induktor verwendet wird. Dieser Induktor umgibt den Stator koaxial und ist zwischen dessen beiden axialen Enden hin und her bewegbar angeordnet. Mittels des Induktors kann der Stator samt dessen Wicklung vollständig sowie in sehr kurzer Zeit auf die vorbestimmte Träufeltemperatur erwärmt und diese Temperatur dann auch eingehalten werden. Die Regelung der Aktivität des Induktors erfolgt bei dieser bekannten Imprägniervorrichtung in Abhängigkeit von der Temperatur des Stators, die mittels eines Temperatursensors berührungslos an dessen radialen Außenseite gemessen wird. Da die Messung der Temperatur des hohlzylindrischen Stators an dessen radialen Außenseite nur indirekt Auskunft über die Temperatur an dessen radialen Innenseite gibt, lag der Erfindung die Aufgabe zugrunde, die aus der DE 10 2017 001 939 A1 bekannte Imprägniervorrichtung dahingehend weiterzuentwickeln, dass bei dieser die für die Betriebssteuerung des Induktors wichtige Temperatur an der radialen Innenseite eines Stators messbar und einem diesbezüglichen Steuergerät zuleitbar ist. Dabei ergab sich die Schwierigkeit, dass der Stator sich während des Vorgangs der Träufelimprägnierung um seine Längsachse dreht.

Die Lösung dieser Aufgabe wird mit einer Imprägniervorrichtung erreicht, welche die Merkmale des Anspruchs 1 aufweist. Vorteilhafte Weiterbildungen der Imprägniervorrichtung sind in den abhängigen Ansprüchen definiert.

Die Erfindung betrifft demnach eine Imprägniervorrichtung zur Träufelimprägnierung eines Stators einer Elektromaschine mit einem unter Temperaturerhöhung aushärtenden Kunstharz, wobei der Stator einen hohlzylindrischen Statorkern sowie wenigstens eine Wicklung aufweist, wobei koaxial innerhalb des Stators eine Antriebswelle angeordnet ist, welche von einem Antriebsmotor antreibbar ist, wobei an der Antriebswelle wenigstens eine Haltevorrichtung angeordnet ist, mittels welcher der Stator mit der Antriebswelle lösbar verbindbar ist, wobei eine Träufelvorrichtung vorhanden ist, mittels welcher das Kunstharz auf zumindest ein axiales Ende der Wicklung des Stators leitbar ist, wobei eine Heizvorrichtung vorhanden ist, mittels welcher die Wicklung sowie der Statorkern auf eine vorbestimmte Träufeltemperatur aufheizbar ist, und bei der die Heizvorrichtung wenigstens einen elektromagnetischen Induktor aufweist, der koaxial oder achsparallel zum Stator bewegbar angeordnet ist.

Zur Lösung der gestellten Aufgabe ist bei dieser Imprägniervorrichtung vorgesehen, dass radial innerhalb des Statorkerns wenigstens ein Temperatursensor angeordnet ist, mittels dem die Temperatur an der radialen Innenseite des Statorkerns und/oder der Wicklung messbar ist. Durch die Anordnung des zumindest einen Temperatursensors radial innerhalb des Stators ist dessen Temperatur sehr viel genauer als im Bereich von dessen radialen Außenseite messbar, sodass sich die Steuerung der induktiven Erwärmung sowie Warmhaltung des Stators besser als bisher steuern lässt.

Der Erfindung lag demnach die Erkenntnis zugrunde, dass die Temperatur an der radialen Innenseite des Stators vorteilhaft mit direkt dort oder in deren unmittelbaren Nähe angebrachten Temperatursensoren messbar ist.

Gemäß einer bevorzugten Weiterbildung der erfindungsgemäßen Imprägniervorrichtung ist vorgesehen, dass der wenigstens eine Temperatursensor an der Antriebswelle angeordnet ist, mittels dem die Temperatur an der radialen Innenseite des Statorkerns und/oder der Wicklung messbar ist. Die Antriebswelle stellt für die Anordnung des zumindest einen Temperatursensors ausreichend Bauraum zur Verfügung. Außerdem wird diese, bestückt mit dem wenigstens einen Temperatursensor, zum Ergreifen und Festhalten eines jeweiligen Stators in diesen axial eingeschoben und später samt dem daran befestigten Temperatursensor wieder entfernt. Somit braucht nicht bei jedem einzelnen zu imprägnierenden Stator an dessen radialen Innenmantelfläche einer oder mehrere der Temperatursensoren befestigt zu werden.

Erfindungsgemäß ist es vorgesehen, dass ein Temperatursensor im Bereich der axialen Mitte des Stators sowie jeweils ein Temperatursensor im Bereich der axialen Enden des Stators oder der dort ausgebildeten Wicklungsköpfe an der Antriebswelle angeordnet sind. Mittels dieser drei Temperatursensoren lässt sich ein axiales Erwärmungsprofil ermitteln, welches eine Steuerungsvorrichtung erkennen lässt, an welchen axialen Bereichen des Stators dessen Erwärmung auf Kosten axial anderer Bereiche noch zu intensivieren ist. Hierzu wird die Steuerungsvorrichtung die axiale Hin- und Her- Bewegung des Induktors und/oder die durch diesen geleitete Stromstärke zur Erreichung einer gleichmäßigen und schnellen Erwärmung des Stators variieren.

Gemäß einer dazu alternativen Ausführungsform kann vorgesehen sein, dass die an der Antriebswelle angeordnete zumindest eine Haltevorrichtung wenigstens zwei radial abspreizbare Arme aufweist, und dass am radial äußeren Ende wenigstens eines dieser Arme ein Temperatursensor angeordnet ist, welcher bei vollständig radial abgespreizten Armen einen Berührungskontakt mit der radialen Innenseite des Statorkerns oder der Wicklung hat. Durch diesen Berührungskontakt des Temperatursensors ist eine besonders genaue Messung der Temperatur des Stators beziehungsweise des Statorkerns an dessen Innenmantelfläche zu erreichen.

Neben der Temperaturmessung an der radialen Innenseite des Stators kann es sinnvoll sein, dass auch an der radialen Außenseite des Stators zusätzlich wenigstens ein Temperatursensor angeordnet ist, dessen Messwerte zur Steuerung der Axialbewegung und des durch den Induktor geleiteten elektrischen Stroms mit Vorteil nutzbar ist.

Hinsichtlich der jeweilige Temperatursensoren ist bevorzugt vorgesehen, dass diese einstückig mit einer Elektronik verbunden sind, welche einen elektromagnetischen Sender aufweist, mittels dem die Messwerte des Temperatursensors als Sendesignale drahtlos zu einer Empfangseinrichtung außerhalb des Stators übertragbar sind. Hierdurch wird eine Versorgung der Temperatursensoren, deren Elektronik und Sender mit elektrischer Energie über elektrische Leitungen und Schleifkontakte an der Antriebswelle und/oder am Stator vorteilhaft vermieden.

In Weiterbildung dieser Ausführungsform ist vorgesehen, dass die Empfangseinrichtung für die gesendeten Signale eine Elektronik aufweist oder mit dieser verbunden ist, welche signaltechnisch mit einer Steuerungseinrichtung verbunden ist, dass diese Steuerungseinrichtung mit dem wenigstens einen elektromagnetischen Induktor der Heizvorrichtung zu dessen Stromversorgung verbunden ist, und bei der die Steuerungseinrichtung einen elektrischen Strom erzeugen sowie zu dem wenigstens einen elektromagnetischen Induktor leiten kann, dessen Stromstärke von der durch den wenigstens einen Temperatursensor gemessenen Temperatur abhängt.

Schließlich ist bevorzugt vorgesehen, dass der wenigstens eine Temperatursensor und dessen Elektronik sowie Sender energieautark als Sensoreinheit ausgebildet sind, wobei zur Energieeinkopplung in dieser Sensoreinheit jeweils eine Spule in der Sensoreinheit vorhanden ist, in der durch den wenigstens einen vorbeibewegten Induktor eine elektrische Spannung induzierbar ist. Demnach wird die für den Betrieb dieser Sensoreinheit notwendige Energie mittels einer elektromagnetischen Einkopplung in die Sensoreinheit beschafft.

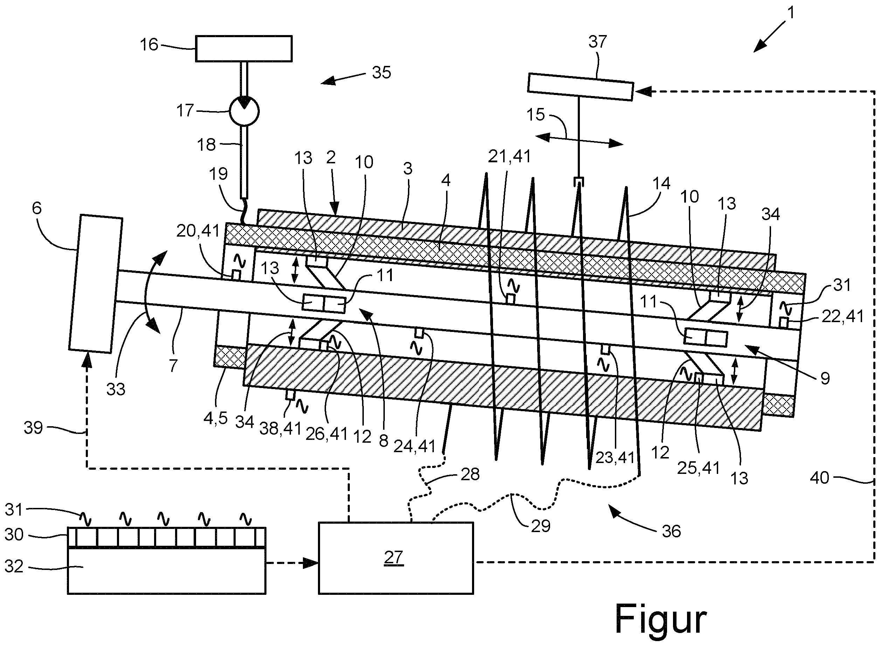

Zum besseren Verständnis der Erfindung ist eine Zeichnung beigefügt, in der ein Ausführungsbeispiel dargestellt ist. In dieser Zeichnung zeigt die einzige Figur eine schematische Darstellung einer Imprägniervorrichtung mit den Merkmalen der Erfindung, in der ein Stator in einem schematischen mittigen Längsschnitt abgebildet ist, der von einem elektromagnetischen Induktor koaxial umgeben ist.

Demnach zeigt die Figur eine Imprägniervorrichtung 1 für einen hohlzylindrischen Stator 2. Der in der Imprägniervorrichtung 1 zu behandelnde Stator 2 ist nach seiner endgültigen Fertigstellung ein Bestandteil einer Elektromaschine, beispielsweise eines Elektromotors oder eines Generators. Der Stator 2 weist beispielhaft einen konventionellen Aufbau mit ringförmig angeordneten Statorsegmenten auf, wobei jedes dieser Statorsegmente einen Rahmen aufweist, an dem hintereinander angeordnete Bleche befestigt sind. Zusammen bilden der Rahmen und die Statorbleche einen Statorkern 3. Zwischen jeweils benachbarten Statorsegmenten sind aus Drähte oder Leiterstäbe aufgebaute Statorwicklungen 4 angeordnet, deren Leitungsenden im Bereich eines axial endseitigen Wicklungskopfes 5 aus dem Statorkern 3 herausgeführt sind. Außerdem ist in dem Stator 2 nicht dargestelltes Isolationsmaterial angeordnet, mittels dem elektrisch voneinander zu trennende Bauteile zueinander beabstandet sind.

Der Stator 2 ist in der Imprägniervorrichtung 1 hinsichtlich seiner geometrischen Längsachse unter einem Neigungswinkel zu einer Horizontalen erkennbar schräg gestellt aufgenommen, wobei dieser Neigungswinkel beispielsweise zwischen 0° und 20° betragen kann.

Der Stator 2 ist in der Imprägniervorrichtung 1 drehbar gelagert angeordnet sowie von einem elektrischen Antriebsmotor 6 gemäß dem Drehrichtungspfeil 33 um seine Längsachse drehbar. Hierzu ist der Antriebsmotor 6 mit seiner Motorwelle über eine nicht dargestellte Vorrichtung mit einer Antriebswelle 7 verbunden. Diese Antriebswelle 7 trägt zwei zueinander axial beabstandete Haltevorrichtungen 8, 9 mit jeweils drei oder vier nach radial außen abspreizbaren sowie nach radial innen einfahrbaren Armen 10, 11, 12. Die Doppelpfeile 34 verdeutlichen die Spreizrichtungen der Arme. Die Arme 10, 11, 12 weisen radial außen jeweils ein Anlegeelement 13 auf, welche nach dem axialen Einführen der Antriebswelle 7 in den zylindrischen Hohlraum des Stators 2 an die radiale Innenmantelfläche des Statorkerns 3 anpressbar sind. Hierdurch wird der Stator 2 mittels der Antriebswelle 7 gehalten sowie axial fixiert, und er kann mittels dieser Antriebswelle 7 sowie dem Antriebsmotor 6 in eine Drehbewegung um deren Längsachse versetzt werden.

Der Antriebsmotor 6 ist über eine Steuerungsleitung 39 mit einem Steuerungsgerät 27 der Imprägniervorrichtung 1 verbunden. Von diesem Steuerungsgerät 27 wird der Antriebsmotor 6 hinsichtlich seiner Drehzahl gesteuert und gegebenenfalls mit elektrischer Energie versorgt.

Der Stator 2 ist über einen vergleichsweise kurzen axialen Abschnitt koaxial von einem als Heizvorrichtung 36 dienenden Induktor 14 ringförmig umgeben, der als elektrische Spule ausgebildet ist. Der Induktor 6 besteht aus einem wendelförmig gebogenen Rohr, durch das ein Kühlmittel führbar ist. Der Induktor 14 kann aber auch ein Flächengebilde sein und dabei beispielsweise eine weitgehend flachstabförmige Querschnittsgeometrie aufweisen. Deutlich ist bei dem in der Figur gezeigten Ausführungsbeispiel erkennbar, dass die axiale Länge des Induktors 14 kürzer ist als die axiale Länge des Stators 2.

Der Induktor 14 ist über zwei elektrische Leitungen 28, 29 mit einer als Frequenzumrichter arbeitenden Spannungsquelle verbunden, die in dem Steuerungsgerät 27 enthalten ist und eine Wechselspannung der gewünschten Frequenz erzeugen kann. Im Betrieb des Induktors 14 strömt durch diesen ein Wechselstrom und erzeugt dabei ein magnetisches Wechselfeld, welches in allen elektrisch leitenden Bauteilen des Stators 2 Wirbelströme erzeugt, welche diese Bauteile gleichzeitig aufheizen. Durch Wärmestrahlung oder Wärmeleitung werden auch benachbarte, elektrisch isolierende Werkstoffe des Stators 2 mit aufgeheizt.

Der Induktor 14 ist mittels eines Aktuators 37 koaxial zum Stator 2 verschiebbar angeordnet. Der Aktuator 37 ist zu seiner Steuerung über eine Steuerungsleitung 40 mit dem Steuerungsgerät 27 verbunden. Mittels des Aktuators 37 kann der Induktor 14 zwischen einer ersten axialen Endposition und einer zweiten axialen Endposition hin und her bewegt werden. Diese Bewegungsrichtungen des Induktors 14 sind durch einen Doppelpfeil 15 veranschaulicht.

Da der Induktor 14 im Vergleich mit dem Stator 2 eine geringere axiale Länge aufweist und von dem Aktuator 37 zwischen den beiden axialen Endpositionen hin und her bewegt wird, kann eine weitgehend gleichmäßige Erwärmung aller Bestandteile des Stators 2 erreicht werden. Wenn der Induktor 14 nach einer Wärmebehandlung des ersten axialen Endabschnittes des Stators 2 diesen Ort in Richtung zum zweiten axialen Endabschnitt verlassen hat, kann die am ersten Endabschnitt des Stators 2 vorhandene Wärme im Inneren desselben an alle dortigen Bauteile weitergegeben werden, so dass auch elektrisch nicht leitende Bauteile des Stators 2 vergleichsweise gleichmäßig zusammen mit den elektrisch leitenden Bauteilen aufgeheizt werden. Hierdurch wird auch eine zu schnelle und zu starke Aufheizung zum Beispiel der metallischen Bauteile des Stators 2 vermieden, in deren Folge ansonsten nichtmetallische Bauteile des Stators 2, wie beispielsweise Materialien zur elektrischen Isolation, geschädigt werden würden. Gleiches geschieht auch an dem zweiten axialen Endabschnitt des Stators 2 sowie in dem axial dazwischen angeordneten Bereich desselben.

Wie die einzige Figur weiter zeigt, gehört zu der Imprägniervorrichtung 1 auch eine Träufelvorrichtung 35 mit einem Behälter 16 für ein bei Raumtemperatur flüssiges Kunstharz 19. Eine Pumpe 17 pumpt das Kunstharz 19 durch eine Leitung zu einer Träufeldüse 18, über die das Kunstharz 19 auf den Wicklungskopf 5 des Stators 2 mit einem vergleichsweise geringen Volumenstrom gelangt. Der von der Pumpe 17 geförderte Volumenstrom ist so groß, dass gerade so viel von dem Kunstharz 19 auf den Wicklungskopf 5 gelangt, wie von dem Stator 2 zum Auffüllen seiner wicklungsbezogen Hohlräume aufgenommen werden kann. Während des Aushärtens des Kunstharzes 19 bei einer erhöhten Temperatur verfestigt sich das Kunstharz 19 zu einem Duroplast.

Gemäß der Erfindung verfügt diese Imprägniervorrichtung 1 auch über eine Mehrzahl von Temperatursensoren, die in der Figur teilweise alternativ zueinander dargestellt sind. Allen bis auf einen der Temperatursensoren ist gemeinsam, dass sie radial innerhalb des Stators 2 an der Antriebswelle 7 oder an den Armen 10, 11, 12 derer Haltevorrichtungen 8, 9 angeordnet sind. Eine Ausnahme bildet ein Temperatursensor 38, der an der radialen Außenseite des Stators 2 angeordnet ist und zusätzlich die Außentemperatur des Stators misst. Auf diesen radial außen angeordneten Temperatursensor 38 kann bei Bedarf aber verzichtet werden.

Wie die Figur zeigt, sind gemäß einer ersten Ausführungsform insgesamt fünf Temperatursensoren 20, 21, 22, 23, 24 an der Außenoberfläche der Antriebswelle 7 befestigt. Die temperatursensitive Fläche der Temperatursensoren weist hin zu der radialen Innenmantelfläche des Stators 2 bezeigungsweise des Statorkerns 4. Gemäß einer dazu alternativen Variante sind zwei Temperatursensoren 25, 26 an dem jeweils radial äußeren Ende eines der Arme 12 der beiden Haltevorrichtungen 8, 9 angeordnet. An diesem radial äußeren Ende der Arme 12 der beiden Haltevorrichtungen 8, 9 weisen diese die erwähnten Anlegeelemente 13 auf, die zum schadlosen Anlegen an die Innenmantelfläche des Stators 2 oder Statorkerns 3 besonders ausgebildet sind. An diesen Anlegeelementen 13 sind die beiden Temperatursensoren 25, 26 befestigt, so dass diese einen Berührungskontakt mit dem Stator 2 oder dessen Wicklung 5 haben.

Alle in dieser Imprägniervorrichtung 1 genutzten Temperatursensoren 20, 21, 22, 23, 24; 25, 26; 38 sind mit einer nicht gesondert dargestellten Sensorelektronik sowie einem elektromagnetischen Sender jeweils in einer Sensoreinheit 41 baulich, vorzugsweise einstückig zusammengefasst. Der von dem jeweiligen Temperatursensor gemessene Temperaturwert wird durch die zugeordnete Sensorelektronik vorverarbeitet und dem jeweiligen Sender der Sensoreinheit 41 zugeleitet. Die jeweiligen Sender senden dann diese Temperaturinformationen als elektromagnetische Sendesignale 31 an eine Empfangseinrichtung 30, welche die elektromagnetisch empfangenen Temperturmesswerte in deren Elektronik 32 in digitale Werte umwandelt und geordnet an das Steuerungsgerät 27 weiterleitet. Das Steuerungsgerät 27 nutzt dann diese Temperturmesswerte, um in Abhängigkeit von deren Wert und deren axialen Verteilung am Stator 2 den Aktuator 37 für eine gezielte Axialbewegung des Induktors 14 anzusteuern, sowie um einen im Hinblick auf eine möglichst schnelle sowie gleichmäßige Temperaturverteilung am Stator 2 angemessenen Induktor-Strom zu erzeugen.

Eine Besonderheit der hier beschriebenen Imprägniervorrichtung 1 besteht darin, dass die Energieversorgung der Sensoreinheiten 41, also des Temperatursensors, der dortigen Elektronik sowie des dortigen Senders, mittels einer elektromagnetischen Einkopplung erfolgt. Dazu weisen die Sensoreinheiten 41 jeweils eine Spule auf, in der durch den wenigstens einen vorbeibewegten Induktor 14 eine elektrische Spannung induzierbar ist. Die dadurch in die jeweilige Sensoreinheit 41 eingekoppelte Energie wird entweder unmittelbar zum Mess- und Sendebetrieb genutzt, oder bei Bedarf in einer kleinen elektrischen Batterie zwischengespeichert, die ebenfalls Bestandteil der jeweiligen Sensoreinheit 41 sein kann.

## Patentansprüche

1. Imprägniervorrichtung (1) zur Träufelimprägnierung eines Stators (2) einer Elektromaschine mit einem unter Temperaturerhöhung aushärtenden Kunstharz (19), wobei der Stator (2) einen hohlzylindrischen Statorkern (3) sowie wenigstens eine Wicklung (4) aufweist, mit einer Antriebswelle (7), die koaxial innerhalb des Stators (2) angeordnet ist, welche von einem Antriebsmotor (6) antreibbar ist, wobei an der Antriebswelle (7) wenigstens eine Haltevorrichtung (8, 9) angeordnet ist, mittels welcher der Stator (2) mit der Antriebswelle (7) lösbar verbindbar ist, wobei eine Träufelvorrichtung (35) vorhanden ist, mittels welcher das Kunstharz (19) auf zumindest ein axiales Ende der Wicklung (4) des Stators (2) leitbar ist, wobei eine Heizvorrichtung (36) vorhanden ist, mittels welcher die Wicklung (4) sowie der Statorkern (3) auf eine vorbestimmte Träufeltemperatur aufheizbar ist, und bei der die Heizvorrichtung (36) wenigstens einen elektromagnetischen Induktor (14) aufweist, der koaxial oder achsparallel zum Stator (2) bewegbar angeordnet ist, **dadurch gekennzeichnet, dass** radial innerhalb des Statorkerns (3) wenigstens ein Temperatursensor (20, 21, 22, 23, 24; 25; 26) angeordnet ist, mittels dem die Temperatur an der radialen Innenseite des Statorkerns (3) messbar ist, wobei ein Temperatursensor (21) im Bereich der axialen Mitte des Stators (2) sowie jeweils ein Temperatursensor (20, 22) im Bereich des axialen Endes des Stators (2) oder der dort ausgebildeten Wicklungsköpfe (5) an der Antriebswelle (7) angeordnet ist.

2. Imprägniervorrichtung nach Anspruch 1, **dadurch gekennzeichnet, dass** der wenigstens eine Temperatursensor (20, 21, 22, 23, 24) an der Antriebswelle (7) angeordnet ist, mittels dem die Temperatur an der radialen Innenseite des Statorkerns (3) und/oder der Wicklung (4) messbar ist.

3. Imprägniervorrichtung einem der Ansprüche 1 bis 2, **dadurch gekennzeichnet, dass** die an der Antriebswelle (7) angeordnete zumindest eine Haltevorrichtung (8, 9) wenigstens zwei radial abspreizbare Arme (10, 11, 12) aufweist, und dass am radial äußeren Ende wenigstens eines dieser Arme (10, 11, 12) ein Temperatursensor (25, 26) angeordnet ist, welcher bei vollständig abgespreizten Armen (10, 11, 12) einen Berührungskontakt mit der radialen Innenseite des Statorkerns (3) oder der Wicklung (4) hat.

4. Imprägniervorrichtung nach einem der Ansprüche 1 bis 3, **dadurch gekennzeichnet, dass** an der radialen Außenseite des Stators (2) zusätzlich wenigstens ein Temperatursensor (38) angeordnet ist.

5. Imprägniervorrichtung nach einem der Ansprüche 1 bis 4, **dadurch gekennzeichnet, dass** der jeweilige Temperatursensor (20, 21, 22, 23, 24; 25, 26; 38) einstückig mit einer Elektronik und einem elektromagnetischen Sender verbunden ist, mittels dem die Messwerte des Temperatursensors (20, 21, 22, 23, 24; 25, 26; 38) als Sendesignale (31) drahtlos zu einer Empfangseinrichtung (30) außerhalb des Stators (2) übertragbar sind.

6. Imprägniervorrichtung nach Anspruch 5, **dadurch gekennzeichnet, dass** die Empfangseinrichtung (30) eine Elektronik (32) aufweist oder mit dieser verbunden ist, welche signaltechnisch mit einer Steuerungseinrichtung (27) verbunden ist, und dass die Steuerungseinrichtung (27) mit dem wenigstens einen elektromagnetischen Induktor (6) der Heizvorrichtung (36) zu dessen Stromversorgung verbunden ist, wobei die Steuerungseinrichtung (27) einen solchen elektrischen Strom erzeugen und zu dem wenigstens einen Induktor (6) leiten kann, dessen Stromstärke von der durch den wenigstens einen Temperatursensor (20, 21, 22, 23, 24; 25, 26; 38) gemessenen Temperatur abhängt.

7. Imprägniervorrichtung nach einem der Ansprüche 1 bis 6, **dadurch gekennzeichnet, dass** der wenigstens eine Temperatursensor (20, 21, 22, 23, 24; 25, 26; 38) und dessen Elektronik sowie Sender energieautark als Sensoreinheit (41) ausgebildet sind, wobei zur Energieeinkopplung in diese Sensoreinheit (41) jeweils eine Spule in der Sensoreinheit (41) vorhanden ist, in der durch den wenigstens einen vorbeibewegten Induktor (14) eine elektrische Spannung induzierbar ist.

## Claims

1. Impregnation device (1) for trickle impregnation of a stator (2) of an electric machine with a synthetic resin (19) which cures under an increase in temperature, the stator (2) having a hollow-cylindrical stator core (3) and at least one winding (4), with a drive shaft (7) which is arranged coaxially inside the stator (2) and is drivable by a drive motor (6), wherein at least one holding device (8, 9) is arranged on the drive shaft (7), by means of which holding device the stator (2) can be detachably connected to the drive shaft (7), wherein a trickle device (35) is provided by means of which the synthetic resin (19) can be directed onto at least one axial end of the winding (4) of the stator (2), wherein a heating device (36) is provided by means of which the winding (4) and the stator core (3) can be heated to a predetermined trickle temperature, and the heating device (36) having at least one electromagnetic inductor (14) which is arranged so as to be movable coaxially or axially parallel to the stator (2), **characterized in that** at least one temperature sensor (20, 21, 22, 23, 24; 25; 26) is arranged radially inside the stator core (3), by means of which temperature sensor the temperature on the radial inner face of the stator core (3) can be measured, wherein a temperature sensor (21) is arranged in the region of the axial center of the stator (2) and a temperature sensor (20, 22) is arranged in each case in the region of the axial end of the stator (2) or the winding heads (5) formed there on the drive shaft (7).

2. Impregnation device according to claim 1, **characterized in that** the at least one temperature sensor (20, 21, 22, 23, 24) is arranged on the drive shaft (7), by means of which temperature sensor the temperature on the radial inner face of the stator core (3) and/or the winding (4) can be measured.

3. Impregnation device according to any of claims 1 to 2, **characterized in that** the at least one holding device (8, 9) arranged on the drive shaft (7) has at least two radially spreadable arms (10, 11, 12), and **in that** a temperature sensor (25, 26) is arranged at the radial outer end of at least one of these arms (10, 11, 12) which, when the arms (10, 11, 12) are fully spread, has physical contact with the radial inner face of the stator core (3) or of the winding (4).

4. Impregnation device according to any of claims 1 to 3, **characterized in that** at least one temperature sensor (38) is additionally arranged on the radial outer face of the stator (2).

5. Impregnation device according to any of claims 1 to 4, **characterized in that** the relevant temperature sensor (20, 21, 22, 23, 24; 25, 26; 38) is integrally connected to electronics and an electromagnetic transmitter by means of which the measured values of the temperature sensor (20, 21, 22, 23, 24; 25, 26; 38) can be transmitted wirelessly as transmission signals (31) to a receiving device (30) outside the stator (2).

6. Impregnation device according to claim 5, **characterized in that** the receiving device (30) has or is connected to electronics (32) which are signal-connected to a control device (27), and **in that** the control device (27) is connected to the at least one electromagnetic inductor (6) of the heating device (36) in order to supply power thereto, the control device (27) being able to generate such an electrical current and conduct it to the at least one inductor (6), with the current intensity of said current depending on the temperature measured by the at least one temperature sensor (20, 21, 22, 23, 24; 25, 26; 38).

7. Impregnation device according to any of claims 1 to 6, **characterized in that** the at least one temperature sensor (20, 21, 22, 23, 24; 25, 26; 38) and its electronics and transmitter are designed to be energy-self-sufficient as a sensor unit (41), with a coil being present in each case in the sensor unit (41) for coupling energy into this sensor unit (41), in which coil an electrical voltage can be induced by the at least one inductor (14) that is moved past.

## Revendications

1. Dispositif d'imprégnation (1) pour l'imprégnation goutte à goutte d'un stator (2) d'une machine électrique avec une résine synthétique (19) durcissant sous l'effet d'une augmentation de température, dans lequel le stator (2) présente un noyau de stator (3) cylindrique creux ainsi qu'au moins un enroulement (4), avec un arbre d'entraînement (7), qui est disposé de manière coaxiale à l'intérieur du stator (2), lequel peut être entraîné par un moteur d'entraînement (6), dans lequel au moins un dispositif de retenue (8, 9) est disposé sur l'arbre d'entraînement (7), au moyen duquel le stator (2) peut être relié de manière détachable à l'arbre d'entraînement (7), dans lequel un dispositif de goutte à goutte (35) est présent, au moyen duquel la résine synthétique (19) peut être guidée sur au moins une extrémité axiale de l'enroulement (4) du stator (2), dans lequel un dispositif de chauffage (36) est présent, au moyen duquel l'enroulement (4) ainsi que le noyau de stator (3) peuvent être chauffés à une température d'égouttage prédéfinie, et pour lequel le dispositif de chauffage (36) présente au moins une bobine d'induction (14) électromagnétique, qui est disposée de manière mobile coaxialement ou parallèlement à l'axe par rapport au stator (2), **caractérisé en ce qu'**au moins un capteur de température (20, 21, 22, 23, 24 ; 25 ; 26) est disposé radialement à l'intérieur du noyau de stator (3), au moyen duquel la température sur la face intérieure radiale du noyau de stator (3) peut être mesurée, dans lequel un capteur de température (21) est disposé dans la zone du centre axial du stator (2) ainsi que respectivement un capteur de température (20, 22) dans la zone de l'extrémité axiale du stator (2) ou des têtes d'enroulement (5) réalisées à cet endroit sur l'arbre d'entraînement (7).

2. Dispositif d'imprégnation selon la revendication 1, **caractérisé en ce que** le au moins un capteur de température (20, 21, 22, 23, 24) est disposé sur l'arbre d'entraînement (7), au moyen duquel la température sur la face intérieure radiale du noyau de stator (3) et/ou de l'enroulement (4) peut être mesurée.

3. Dispositif d'imprégnation selon l'une quelconque des revendications 1 à 2, **caractérisé en ce que** le au moins un dispositif de retenue (8, 9) disposé sur l'arbre d'entraînement (7) présente au moins deux bras (10, 11, 12) pouvant s'écarter radialement, et qu'un capteur de température (25, 26), lequel, lorsque les bras (10, 11, 12) sont entièrement écartés, a un contact avec la face intérieure radiale du noyau de stator (3) ou de l'enroulement (4), est disposé sur l'extrémité radialement extérieure d'au moins un de ces bras (10, 11, 12).

4. Dispositif d'imprégnation selon l'une quelconque des revendications 1 à 3, **caractérisé en ce qu'**en plus au moins un capteur de température (38) est disposé sur la face extérieure radiale du stator (2).

5. Dispositif d'imprégnation selon l'une quelconque des revendications 1 à 4, **caractérisé en ce que** le capteur de température (20, 21, 22, 23, 24 ; 25, 26 ; 38) respectif est relié d'une seule pièce à une électronique et à un émetteur électromagnétique, au moyen duquel les valeurs de mesure du capteur de température (20, 21, 22, 23, 24 ; 25, 26 ; 38) peuvent être transmises sans fil en tant que signaux d'émission (31) à un système de réception (30) à l'extérieur du stator (2).

6. Dispositif d'imprégnation selon la revendication 5, **caractérisé en ce que** le système de réception (30) présente une électronique (32) ou est relié à celle-ci, laquelle est reliée par technique de signalisation à un système de commande (27), et que le système de commande (27) est relié à la au moins une bobine d'induction (6) électromagnétique du dispositif de chauffage (36) pour l'alimentation en courant de celle-ci, dans lequel le système de commande (27) peut produire un courant électrique dont l'intensité de courant dépend de la température mesurée par le au moins un capteur de température (20, 21, 22, 23, 24 ; 25, 26 ; 38) et le guider vers la au moins une bobine d'induction (6).

7. Dispositif d'imprégnation selon l'une quelconque des revendications 1 à 6, **caractérisé en ce que** le au moins un capteur de température (20, 21, 22, 23, 24 ; 25, 26 ; 38) et l'électronique de celui-ci ainsi que l'émetteur sont réalisés avec une autosuffisance énergétique sous la forme d'une unité capteur (41), dans lequel pour l'injection d'énergie dans cette unité capteur (41) respectivement une bobine est présente dans l'unité capteur (41), dans laquelle une tension électrique peut être induite par la au moins une bobine d'induction (14) déplacée devant celle-ci.
